**Europäisches Patentamt**

**European Patent Office**

**Office européen des brevets**

(19)

(11) Veröffentlichungsnummer: **0 228 530**
**B1**

(12) # EUROPÄISCHE PATENTSCHRIFT

(45) Veröffentlichungstag der Patentschrift:
09.05.90

(21) Anmeldenummer: **86115131.4**

(22) Anmeldetag: **31.10.86**

(51) Int. Cl.⁵: **H01M 4/66, H01M 4/50**
// H01M6/04

(54) Galvanisches Element.

(30) Priorität: **09.12.85 DE 3543455**

(43) Veröffentlichungstag der Anmeldung:
**15.07.87 Patentblatt 87/29**

(45) Bekanntmachung des Hinweises auf die Patenterteilung:
**09.05.90 Patentblatt 90/19**

(84) Benannte Vertragsstaaten:
**BE CH DE ES FR GB IT LI LU NL SE**

(56) Entgegenhaltungen:
**DE-A- 1 421 582**
**US-A- 2 861 116**
**US-A- 3 933 521**

(73) Patentinhaber: **VARTA Batterie Aktiengesellschaft, Am Leineufer 51, D-3000 Hannover 21(DE)**

(72) Erfinder: **Schneider, Gerhard, Dr. Dipl.-Chem., Weimarer Strasse 8, D-7090 Ellwangen(DE)**
Erfinder: **Laig-Hörstebrock, Helmut, Dr. Dipl.-Phys., Prieststrasse 13, D-6000 Frankfurt 1(DE)**

(74) Vertreter: **Kaiser, Dieter Ralf, Dipl.-Ing., Gundelhardtstrasse 72 Postfach 16 20, D-6233 Kelkheim/Ts.(DE)**

## Beschreibung

Die Erfindung betrifft ein galvanisches Element mit alkalischem Elektrolyten und MnO$_2$-Elektrode mit einem Stromableiter, dessen Oberfläche zur Herabsetzung des Kontaktwiderstandes mit einem zusätzlichen Fremdmetall versehen ist.

Derartige galvanische Primärelemente enthalten gepreßtes Metalloxid als positive Elektrode, eine aus Zinkpulver hergestellte negative Elektrode und einen von einem Scheider aufgesaugten alkalischen Elektrolyten in einem Stahlgehäuse. In der Regel stellt das Stahlgehäuse zugleich den Stromableiter für das positive Aktivmaterial dar.

Erfahrungsgemäß sind derartige Primärelemente mit dem Nachteil behaftet, daß sich ihnen nach längerer Lagerzeit bei weitem kein so hoher Entladestrom mehr entnehmen läßt wie im frisch hergestellten Zustand. Insbesondere in Zellen des alkalischen MnO$_2$/Zn-Primärsystems bildet sich während der Lagerung auf dem Stromableiter der positiven Metalloxidelektrode unter bestimmten Bedingungen eine schlecht leitende Deckschicht aus, die zu einer unerwünschten Erhöhung des inneren Widerstandes der Zelle führt. Da das Mangandioxid an den Gehäusebecher aus Stahl oder nickelpattiertem Stahl unmittelbar angepreßt ist, erklärt sich die mangelnde Betriebsbereitschaft gelagerter Zellen durch eine oxidative Veränderung der Nickelauflage und damit durch das Wachsen eines Kontaktwiderstandes im Übergangsbereich Metalloxid/positiver Stromableiter.

Das Phänomen der Ausbildung schlecht leitender Grenzflächen bei Kontaktierung eines Stromableiters mit einer elektrochemisch aktiven positiven Substanz ist übrigens auch bei Primärzellen mit Festelektrolyten vorhanden, und man hat dem, wie der US-PS 2 861 116 zu entnehmen ist, durch Verwendung eines möglichst inerten Ableitermaterials abzuhelfen gesucht. Als geeignet fand man u.a. Platin, Palladium, Tantal, Molybdän, Silber, Nickel, Blei, Gold, Titan, Zirkon und Kohlenstoff.

Durch die DE-PS 1 421 582 werden diese Angaben als zu pauschal abgetan. Für galvanische Primärelemente, die sich dem eingangs formulierten Gattungsbegriff zuordnen lassen, wird Gold als das vorzugsweise Mittel der Wahl, in der Form eines Goldüberzuges auf dem positiv gepolten Stahlbehälter, empfohlen.

Ein nicht unbedeutender Nachteil eines goldenen oder vergoldeten Ableiterkontaktes ist allerdings sein material- und verfahrensbedingter Preis. Im Falle der Verwendung von Quecksilberoxid als positives Elektrodenmaterial bleibt es außerdem nicht aus, daß das Gold allmählich durch das bei der Entladung des HgO entstehende Hg amalgamiert wird, so daß seine Eignung hinsichtlich der Lagerbeständigkeit des anfänglich niedrigen Kontaktwiderstandes zumindest fraglich erscheint. Noch mehr gilt dieser Vorbehalt gegen Silber als Ableitermaterial, welches auch von HgO amalgamiert und unter den Bedingungen des Zellenbetriebes schließlich aufgelöst wird.

Aus der US-PS 3 933 521 ist ein Elektrodenträger aus einem rostfreien Stahl oder Nickel bekannt, dessen Oberfläche mit Kobalt plattiert ist. Allerdings ist dieses Trägersubstrat für die negative Lithiumelektrode in einer elektrochemischen Hochtemperaturzelle bestimmt.

Der Erfindung liegt die Aufgabe zugrunde, für die positive Metalloxidelektrode eines alkalischen Primärsystems, insbesondere einer Alkali-Mangan-Zelle, einen Stromableiter verfügbar zu machen, bei dem ein möglichst geringer Kontaktwiderstand auch längerfristig lagerstabil und potentialstabil aufrechterhalten werden kann und der im Fertigungsprozeß der Zellen auf wirtschaftliche Weise zu realisieren ist.

Die Aufgabe wird erfindungsgemäß durch ein galvanisches Element gelöst, wie es im Patentanspruch 1 angegeben ist.

Besonders vorteilhaft kommt die erfindungsgemäße Maßnahme bei MnO$_2$-Elektroden zum Tragen. Dabei sollte die Kobaltkonzentration im Oberflächenbereich des Ableitermetalls mindestens bei 0,1 Atom %, bezogen auf das reine Kobalt, liegen.

Sehr günstig für die Aufbringung des Kobalts auf den Stromableiter ist eine Nickeloberfläche.

Grundsätzlich ist aber auch die sorgfältig gereinigte Oberfläche eines Stahlblechs geeignet.

Das für die Fertigung der Elementebecher eingesetzte Stahlblech ist im allgemeinen galvanisch vernickelt und darüber hinaus wärmebehandelt. Durch ein sogenanntes Diffusionsglühen wird ein tieferes Eindringen der Nickelatome in die Stahloberfläche erzielt. Das nickelplattierte Stahlblech erlangt dadurch Tiefziehqualität.

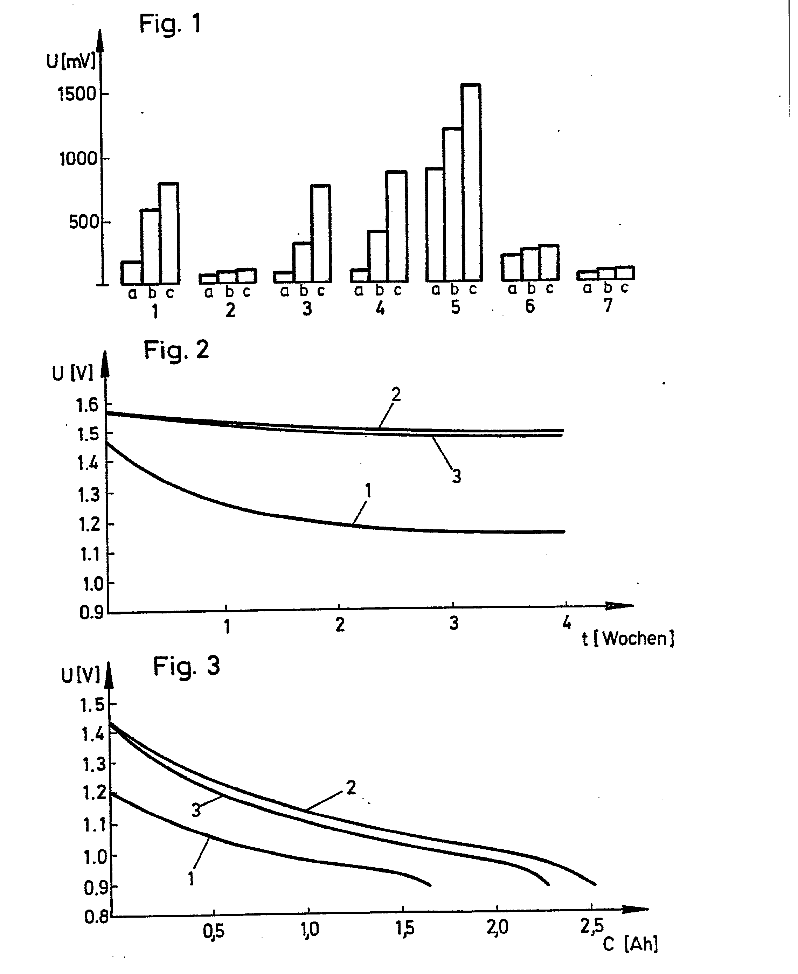

Im Hinblick auf die erfindungsgemäße Kobaltbeschichtung des Stromableiters ist es besonders vorteilhaft, daß sie die spanlose Verformung eines Stahlblechs z.B. durch Tiefziehen in vollem Umfang zuläßt. Dabei braucht weder die Kobaltschicht für sich noch die z.B. auf ein Tiefzieh-Stahlblech aufgebrachte Nickelschicht völlig porenfrei zu sein. Hierbei bietet es sich an, die Kobaltaufbringung, auf die noch näher eingegangen wird, entweder nach dem üblichen Diffusionsglühen des mit einer Nickelschicht versehenen Stahlbandes auszuführen oder sie vor dem Diffusionsglühen eventuell parallel zur galvanischen Vernickelung vorzunehmen. Das Kobalt liegt dann in der Oberflächenschicht als Legierungsbestandteil, vorzugsweise in einer Ni/Co- oder Ni/Co/Fe-Legierung, vor. Es hat sich gezeigt (vgl. Fig. 1 und Erläuterungen hierzu weiter unten), daß eine unter der Bezeichnung "Vacon 10" hergestellte Metall-Legierung aus 28% Ni, 18% Co und 54% Fe relativ niedrige und stabile Kontaktwiderstände besitzt.

Es ist schließlich möglich, die erfindungsgemäße Kobaltgabe auf fertig geformte Ni-beschichtete Stromableiter für alkalische MnO$_2$-Elektroden anzuwenden.

Für die praktische Aufbringung des Kobalts auf die Ableiteroberfläche stehen verschiedene Wege offen. Ein chemisches Verfahren besteht darin, daß Kobalt aus einer Kobaltsalzlösung mit Hilfe eines Reduktionsmittels auf dem Ableitermetall in gleichmäßiger Schicht ausgeschieden wird. Dabei kommt, wenn Nickel das eigentliche Substrat für die Abscheidung bildet, diesem noch eine besonders günstige katalytische Wirksamkeit zu.

Eine andere Methode ist die elektrochemische Reduktion von Kobaltionen, wobei durch die kathodische Polarisation des Ableiter-Grundmetalls zugleich ein etwa vorhandener Oxidbelag abgebaut wird.

Weitere Verfahren sind physikalisch-metallurgischer Art, bei denen das Kobalt z.B. durch Bedampfen oder Warmplattieren aufgebracht wird.

Technisch besonders gut realisierbar ist die elektrochemische Methode, zumal sie auf rationelle Weise mit der galvanischen Vernickelung des Grundmetalls, z.B. Tiefziehstahlblech, verknüpft werden kann.

Wie sich indessen gezeigt hat, sind nicht alle wässrigen Kobalt-Ionen-Lösungen gleich gut geeignet. So scheidet z.B $Co(NO_3)_2$ wegen Ammoniakbildung, die zu unerwünschten Nebenreaktionen führt, vollständig aus.

Mit sehr gutem Erfolg ist dagegen eine wässrige Kobaltsulfatlösung verwendbar, die vorzugsweise aus 50 bis 100 g $CoSO_4 \cdot 7 H_2O$ in 50 ml $H_2O$ angesetzt wird.

Als Stromdichtebereich für die kathodische Nickeloberflächenbehandlung eignen sich 5 bis 100 $mA/cm^2$, vorzugsweise 20 bis 50 $mA/cm^2$. Unter dieser Bedingung ist eine Behandlungszeit von nur 10 sec. bis 50 sec völlig ausreichend, um die erfindungsgemäße Herabsetzung des Kontaktwiderstandes zu erzielen. Die hierbei entstehende Schichtdicke liegt µm-Bereich. Die Behandlungstemperatur kann im Bereich der Raumtemperatur liegen. Die vorgenannte Behandlung sei nachfolgend als Kobaltierung bezeichnet. Nach der Behandlung wird die kobaltierte Fläche mit destilliertem oder entsalztem Wasser abgespült und konventionell getrocknet, z.B. mit Warmluft.

Die überraschende Wirkung der Ableiter-Kobaltierung wurde experimentell überprüft, wobei in einer Widerstandsmeßanordnung verschiedene Kontaktoberflächen zu einem Vergleichstest dienten.

Die eigens hierfür erstellte Testapparatur nahm jeweils zwischen einer oxidationsfreien, z.B. vorgoldeten Kontaktfläche und einer auf bestimmte Art vorbehandelten, zu untersuchenden Kontaktfläche eine tablettenförmige $MnO_2$-Elektrode auf, wobei ein einstellbarer Druck auf diesen Schichtenstapel von einem entsprechenden Widerlager aufgefangen wurde. Die $MnO_2$-Tablette war mit ca. 40%iger KOH getränkt, und ein umgebendes Gehäuse verhinderte ihr Austrocknen sowie eine Reaktion der KOH mit dem $CO_2$ der Luft. Die der $MnO_2$-Elektrode beiderseits anliegenden Kontaktflächen waren über einen äußeren Stromkreis verbunden, dem ein Gerät zur Einstellung eines konstanten Stromes i, ein Amperemeter zu dessen Kontrolle, sowie ein Voltmeter zur Bestimmung des Spannungsabfalls U bei gegebenem Strom i zugeordnet war. Der Spannungsabfall ergibt sich, nachdem mit Hilfe des Konstantstromgerätes ein bestimmter Strom i eingestellt ist, durch die Beziehung $U = i (R_1 + R_2 + R_3)$, in der $R_1$ der Kontaktwiderstand zwischen oxidationsfreier Kontaktfläche und $MnO_2$-Tablette, $R_2$ der Widerstand der $MnO_2$-Tablette und $R_3$ der Kontaktwiderstand zwischen $MnO_2$-Tablette und zu untersuchender Kontaktfläche bedeuten.

Mit einer Braunsteintablette der gewählten Abmessung 10 mm x 5 mm (Durchmesser x Höhe) und einer Zusammensetzung von 88% $MnO_2$, 10% Graphit und 2% Polyäthylen als Bindermaterial ließ sich bei einem Druck von p = 75 bar und einer gegebenen Temperatur zunächst nachweisen, daß die bei Lagerung auftretenden Widerstandsänderungen ausschließlich durch Veränderungen des Kontaktwiderstandes $R_3$, d.h. des Widerstandes zwischen der Braunsteintablette und der fraglichen Ableiterschicht verursacht wird, wenn diese z.B. eine vernickelte Stahlschicht darstellt, wie sie bei alkalischen Zink/Braunstein-Systemen üblicherweise Verwendung findet. Mit anderen Worten, die Widerstände $R_1$ (zwischen vergoldetem Ableiter und $MnO_2$-Tablette) und $R_2$ (Widerstand der $MnO_2$-Tablette) sind nicht nur relativ lagerstabil, sondern in der gewählten Anordnung auch vergleichsweise klein gegenüber Widerstand $R_3$.

Nach dieser Meßmethode wurden nunmehr verschieden gewählte und vorbehandelte, für den Widerstand $R_3$ verantwortliche Ableiter getestet, indem der weiter oben definierte Spannungsabfall U

a) unmittelbar nach Montage der Meßanordnung,
b) nach 24 h Lagerzeit,
c) nach 96 h Lagerzeit

unter den Bedingungen einer Lagertemperatur von 90°C und einem konstanten Meßstrom i = 500 mA bestimmt wurde.

Die relativ kurze Lagerzeit in Kombination mit der relativ hohen Lagertemperatur reicht aus, um die Güte eines durch Art und Vorbehandlung charakterisierten Ableiters zu beurteilen. Das Ergebnis einer 70°C-Lagerung für einen Monat entspricht etwa einer Lagerzeit von 1 bis 1,5 Jahren bei Raumtemperatur.

Die Ergebnisse der elektrischen Untersuchungen werden anhand von Figurendarstellungen näher erläutert.

Figur 1 zeigt den Spannungsabfall U (mV) als Maß für den Kontaktwiderstand bei verschiedenen Ableiter-Oberflächen nach jeweils drei verschiedenen Lagerzeiten.

Figur 2 zeigt Lastspannungen U(V) von Zink/Braunstein-Primärzellen des Typs LR 14 als Funktion der Lagerzeit t (Wochen) im Vergleich zu Zellen, die mit einem erfindungsgemäß kobaltierten bzw. vergoldeten positiven Stromableiter ausgestattet sind.

Figur 3 zeigt einen Vergleich der vorgenannten Zellen hinsichtlich ihres Entladeverhaltens.

In Figur 1 sind die nach der vorgenannten Meßmethode erhaltenen U = i R-Werte für verschieden gewählte und vorbehandelte Ableiter 1 bis 7 in Form von Balkendiagrammen aufgetragen, wobei für jeden Ableiter jeweils drei U-Meßwerte, gemäß den obigen Lagerzeiten a), b) und c) angegeben sind. Die jeweiligen U-Werte sind an der Ordinate abzulesen. Große U-Werte bedeuten große $R_3$-Widerstände und umgekehrt.

Balkendiagramm 1 zeigt das an einer unbehandelten, vernickelten Stahloberfläche erhaltene Ergebnis.

Wie man erkennt, wächst unter den angegebenen Bedingungen der Kontaktwiderstand innerhalb von 96 h um das Fünffache.

Balkendiagramm 2 zeigt im Vergleich zu Diagramm 1 das Verhalten eines vergoldeten Nickel-Kontaktes. Wie man erkennt, ist selbst nach 96 h der Widerstand kleiner als der Anfangswiderstand gemäß Diagramm 1.

Balkendiagramm 3 zeigt das Verhalten einer mit feinem Schleifpapier behandelten Nickeloberfläche. Das Schleifen war mit dem Ziel verbunden, eventuell stärkere Nickeloxidschichten vor dem Kontaktexperiment zu beseitigen. Wie man erkennt, ist der erhaltene Anfangswert mit dem von Gold (Diagramm 2) zu vergleichen. Doch bereits nach 24 h hat sich der relativ niedrige Anfangswiderstand beinahe versechsfacht. Nach 96 h ist der Anfangswiderstand sogar auf das über 14fache angestiegen.

Balkendiagramm 4 zeigt das Ergebnis eines Versuches, durch kathodische Polarisation in einer LiOH-Lösung Lithium-Ionen in die oxidische Nickeloberfläche einzubauen. Wie man erkennt, verläuft zumindest unter den gewählten Bedingungen das Experiment negativ. Kontaktprobleme des $MnO_2$/Li/Ni-Ableitersystems wurden kürzlich auch von anderer Seite berichtet (N.A. Fleischer and R.J. Ekern, J. Elektrochem. Soc. Vol. 132, Jan. 1985).

Eine dramatische Verschlechterung des Ableiterkontaktes wird aus dem Balkendiagramm 5 deutlich. In diesem Fall wurde versuchsweise der vernickelte Ableiterkontakt in einer $MnSO_4$-Lösung kathodisch polarisiert, wobei Mangan in die oberflächennahe Nickelschicht "eingebaut" worden sein dürfte. Wie man erkennt, ist bereits der Anfangswiderstand um mehr als das 8fache größer als der "96-h-Widerstand" von Gold (Diagramm 2).

Diese Ergebnisse lassen bereits erkennen, daß der Einbau von Fremdmetallen oder Fremdmetallionen in die Nickeloberflächenschicht sowie die Art der Vorbehandlung des Nickelableiters von ausschlaggebender Bedeutung für die Eigenschaften der Kontaktschicht sind. Einen wichtigen Hinweis dafür, daß bei der Herstellung einer Randschichtstruktur in dem gewünschten Sinne (niedriger Widerstand, zeitstabil, kompatibel mit $MnO_2$ in alkalischem Elektrolyten) "Kobalt" für das relativ günstige Verhalten des Kontaktwiderstandes verantwortlich sein muß, lieferte jedoch das weiter vorn schon erwähnte Legierungsmetall "Vacon 10", was im Balkendiagramm 6 zum Ausdruck kommt.

Um den Einfluß von Kobalt zu prüfen, wurde der für praktisch alle Messungen verwendete vernickelte Stahlableiter in einer wässrigen Kobalt-Ionen-Lösung kathodisch polarisiert. Hierbei ergab sich ein überraschend positiver und ein in diesem Ausmaß unerwarteter Effekt. Das Ergebnis ist in Balkendiagramm 7 dargestellt. Wie man erkennt, ist das Ergebnis mit dem an Gold erhaltenen (Diagramm 2) vergleichbar.

Wie darüber hinaus das mit "Vacon 10" erhaltene Ergebnis (Diagramm 6) noch zeigt, ist nicht nur die elektrochemische Abscheidung von Co, sondern auch seine Zulegierung recht wirkungsvoll.

Eine weitere interessante Beobachtung besteht darin, daß die $MnO_2$-Tablette, die wie beschrieben montiert und untersucht wurde, sich mit der kobaltierten Nickelfläche festhaftend verbindet, im Gegensatz zu einem reinen $MnO_2$/Nickelkontakt. Die $MnO_2$-Tablette wirkt wie auf die Oberfläche des Stromableiters gemäß der Erfindung geschweisst. Es ist zu vermuten, daß es hierbei zu einer gut leitenden Mn, Co und Ni-Oxid/Hydroxid-Struktur kommt, die spezifisch für den $MnO_2$/Co-Grenzflächen-Kontakt ist.

Weitere experimentelle Resultate, die für den Vorteil von erfindungsgemäß mit Kobalt versehenen Stromableitern sprechen, sind den Figuren 2 und 3 zu entnehmen. Sie geben das Spannungsverhalten unter Last als Funktion der Lagerzeit und das Entladeverhalten von drei alkalischen Zink/Braunstein-Primärelementen vom Rundzellentyp LR 14 (nach IEC) wieder, wobei Kurve 1 stets mit einem unbehandelten vernickelten Stahlbecher (Standard-Zelle) Kurve 2 mit einem vernickelten und anschließend vergoldeten Stahlbecher und Kurve 3 mit einem vernickelten und anschließend kobaltierten Stahlbecher (erfindungsgemäß) korrespondiert.

In Figur 2 ist durch ein U (V) / t (Wochen)-Diagramm der Spannungseinbruch bei einer Belastung mit 2 Ohm für eine Zeitdauer von 0,2 sec als Funktion der Lagerzeit bei 70°C dargestellt. Wie man sieht, zeigt der unbehandelte Stahlbecher (Kurve) nach einem Monat eine Lastspannung U, die (bei Raumtemperatur gemessen) ca. 300 mV niedriger liegt als die des kobaltierten Bechers (Kurve 3). Hingegen liegt die Lastspannung des kobaltierten Bechers (Kurve 3) nur ca. 25 mV negativer als die des vergoldeten Bechers (Kurve 2). Dieses Ergebnis ist in Übereinstimmung mit den Ergebnissen nach Figur 1, Diagramme 1, 2, 7 und spricht für die hervorragende Wirkung der Kobaltierung.

Figur 3 zeigt das Ergebnis einer sehr "harten" Dauerentladung mit 2 Ohm. Wie man erkennt, liefert die Zelle mit dem unbehandelten Stahlbecher bis zur Entladeschluß-Spannung von 0,9 V nur eine Kapazität von 1,58 Ampere-Stunden (Kurve 1), die Zelle mit dem kobaltierten Stahlbecher liefert hingegen 2,3 Ampere-Stunden (Kurve 3).

Wie ersichtlich, liegt die Zelle mit dem vergoldeten Stahlbecher (Kurve 2) nur um ca. 0,2 Ampere-Stunden über dem Ergebnis mit dem kobaltierten Becher. Die Kobaltierung hat also in diesem Fall das Entladeergebnis um ca. 50% gegenüber dem nicht kobaltierten Stahlbecher verbessert.

Es sei darauf hingewiesen, daß Ergebnisse dieser Art auch von der jeweils verwendeten Braunsteinqualität abhängen. Stets erweist sich jedoch der kobaltierte Stahlbecher bzw. der Kobalt-enthaltende Stahlbecher dem nicht Kobalt enthaltenden Stahlbecher als deutlich überlegen. Aus dem vorliegenden Material geht somit eindeutig hervor, daß Kobalt bzw. eine Kobaltierung dem Kontaktwider-

stand zwischen einer alkalischen MnO₂-Elektrode und einem vernickelten Stromableiter Eigenschaften verleiht, die einer Vergoldung des Stromableiters nahezu gleichkommen.

## Patentansprüche

1. Galvanisches Element mit alkalischem Elektrolyten und MnO₂-Elektrode mit einem Stromableiter, dessen Oberfläche zur Herabsetzung des Kontaktwiderstandes mit einem zusätzlichen Fremdmetall versehen ist, dadurch gekennzeichnet, daß zumindest in der Oberflächenschicht des Stromableiters Kobaltmetall oder eine Kobaltlegierung vorhanden ist.

2. Galvanisches Element nach Anspruch 1, dadurch gekennzeichnet, daß der auf Kobaltmetall bezogene Kobaltgehalt der Stromableiter-Oberfläche mindestens 0,1 Atom% beträt.

3. Galvanisches Element nach Anspruch 2, dadurch gekennzeichnet, daß das Kobalt oder die Kobaltlegierung auf eine Nickeloberfläche des Stromableiters aufgebracht ist.

4. Galvanisches Element nach Anspruch 3, dadurch gekennzeichnet, daß der Stromableiter ein nickelplattiertes Tiefzieh-Stahlblech ist.

5. Galvanisches Element nach Anspruch 4, dadurch gekennzeichnet, daß auf dem Stromableiter Kobalt in einer Ni/Co- und Ni/Co/Fe-Legierung vorliegt.

6. Galvanisches Element nach einem der Ansprüche 1 bis 5, dadurch gekennzeichnet, daß das Kobalt bzw. die Kobaltlegierung durch ein chemisches oder elektrochemisches Verfahren auf die Oberfläche des Stromableiters aufgebracht ist.

7. Galvanisches Element nach einem der Ansprüche 1 bis 5, dadurch gekennzeichnet, daß das Kobalt bzw. die Kobaltlegierung mit Hilfe eines physikalisch-metallurgischen Verfahrens, insbesondere durch Aufdampfen oder Warmplattieren, auf die Oberfläche des Stromableiters aufgebracht ist.

8. Galvanisches Element nach Anspruch 6, dadurch gekennzeichnet, daß das Kobalt durch kathodische Abscheidung aus einer Kobaltsulfatlösung auf die Oberfläche des Stromableiters aufgebracht ist.

## Claims

1. Galvanic element with alkaline electrolyte and MnO₂ electrode having a current discharging member, the surface of which is provided with an additional foreign metal for reducing the contact resistance, characterized in that cobalt metal or a cobalt alloy is present at least in the surface layer of the current discharging member.

2. Galvanic element according to Claim 1, characterized in that the cobalt content of the current discharging member surface related to cobalt metal is at least 0.1 atom %.

3. Galvanic element according to Claim 2, characterized in that the cobalt or the cobalt alloy is applied to a nickel surface of the current discharging member.

4. Galvanic element according to Claim 3, characterized in that the current discharging member is a nickel-plated deepdrawing steel plate.

5. Galvanic element according to Claim 4, characterized in that there is present on the current discharging member cobalt in a Ni/Co or Ni/Co/Fe alloy.

6. Galvanic element according to one of Claims 1 to 5, characterized in that the cobalt or the cobalt alloy is applied to the surface of the current discharging member by a chemical or electrochemical process.

7. Galvanic element according to one of Claims 1 to 5, characterized in that the cobalt or the cobalt alloy is applied to the surface of the current discharging member with the aid of a physical-metallurgical process, in particular by vapour deposition or hotplating.

8. Galvanic element according to Claim 6, characterized in that the cobalt is applied to the surface of the current discharging member by cathodic deposition from a cobalt sulphate solution.

## Revendications

1. Elément galvanique avec un électrolyte alcalin et une électrode MnO₂ avec un conducteur de prélèvement de courant dont la surface a été munie d'un métal étranger additionnel pour abaisser la résistance de contact, élément caractérisé en ce qu'au moins dans la couche superficielle du conducteur de prélèvement de courant, du cobalt métallique ou bien un alliage de cobalt est présent.

2. Elément galvanique selon la revendication 1, caractérisé en ce que la teneur en cobalt, rapportée au cobalt métal, de la surface du conducteur de prélèvement de courant est au moins de 0,1 atome %.

3. Elément galvanique selon la revendication 2, caractérisé en ce que le cobalt, ou bien l'alliage de cobalt, est déposé sur une surface de nickel du conducteur de prélèvement de courant.

4. Elément galvanique selon la revendication 3, caractérisé en ce que le conducteur de prélèvement de courant est un godet en acier plaqué de nickel et obtenu par emboutissage profond.

5. Elément galvanique selon la revendication 4, caractérisé en ce que sur les conducteurs de prélèvement de courant se trouve du cobalt dans un alliage Ni/Co ou bien Ni/Co/Fe.

6. Elément galvanique selon une des revendications 1 à 5, caractérisé en ce que le cobalt ou bien l'alliage de cobalt est opposé sur la surface du conducteur de prélèvement de courant par un procédé chimique ou électrochimique.

7. Elément galvanique selon une des revendications 1 à 5, caractérisé en ce que sur la surface du conducteur de prélèvement de courant à l'aide d'un procédé physique-métallurgique, notamment par métallisation sous vide ou bien par placage à chaud.

8. Elément galvanique selon la revendication 6, caractérisé en ce que le cobalt est déposé sur la surface du conducteur de prélèvement de courant par précipitation cathodique à partir d'une solution de sulfate de cobalt.

Fig. 1

Fig. 2

Fig. 3